Europäisches Patentamt

European Patent Office

Office européen des brevets

(11) Numéro de publication: **0 230 194**

**A1**

(12) **DEMANDE DE BREVET EUROPEEN**

(21) Numéro de dépôt: 86402926.9

(22) Date de dépôt: 23.12.86

(51) Int. Cl.4: **A23L 1/31** , A23L 3/10 , A23L 3/00

(30) Priorité: **24.12.85 FR 8519119**

(43) Date de publication de la demande:
**29.07.87 Bulletin 87/31**

(84) Etats contractants désignés:
**AT BE CH DE ES FR GB GR IT LI LU NL SE**

(71) Demandeur: **SABIM Société Anonyme des Abattoirs Impérator**
**Zone Industrielle-Route de la Flèche**
**F-72300 Sable Sur Sarthe(FR)**
Demandeur: **Oliver, Michel Georges Charles**
**52 rue Madame**
**Paris 6ème(FR)**

(72) Inventeur: **Saniard, Bernard Joseph Marcel**
**13, rue Gambetta**
**Sable sur Sarthe (Sarthe)(FR)**
Inventeur: **Oliver,Michel Georges Charles**
**52, rue Madame**
**Paris 6ème(FR)**

(74) Mandataire: **Rataboul, Michel**
**Cabinet Michel Rataboul 69, rue de Richelieu**
**F-75002 Paris(FR)**

(54) **Préparation culinaire conditionnée sans vide et conservée à température positive, procédé et installation pour l'élaboration d'une telle préparation.**

(57) La préparation culinaire (2) est caractérisée en ce qu'elle comprend plusieurs composants hétérogènes cuits tels que viandes (3,4,5,6,13-14), légumes (7,8,9,10) et sauce cuits, placés ensemble dans une enveloppe souple (1) avec un gaz tel que de l'air, cet ensemble préparation culinaire (2) enveloppe (1) étant conservé à une température positive comprise entre 0 et 7< Celsius, et de préférence entre 0 et 3< Celsius, afin que la préparation (2) comprenne des composants frais, c'est-à-dire ayant été cuits à une température inférieure à 100< Celsius à la pression atmosphérique et n'ayant subi aucune congélation.

FIG.1

## PREPARATION CULINAIRE CONDITIONNEE SANS VIDE ET CONSERVEE A TEMPERATURE POSITIVE, PROCEDE ET INSTALLATION POUR L'ELABORATION D'UNE TELLE PREPARATION

La conservation d'aliments préparés fait appel à différentes techniques qui toutes prévoient un traitement utilisant les effets de températures très différentes de la température ambiante et tout particulièrement les plus éloignées possibles de la zone comprise entre 30 et 50degrés Celsius. Au XIXème siécle, Appert et Pasteur préconisent de traiter des aliments par la chaleur pendant des temps relativement longs. Appert prévoit de placer les aliments dans des récipients rigides clos ("boites de conserve"). Pasteur fixe, pour les liquides, la limite de température juste au-dessous de sa valeur provoquant leur ébullition. La pasteurisation permet une conservation pendant une durée limitée et prévoit la destruction des micro-organismes pathogènes et la majorité des autres germes, pour des raisons d'hygiène et de conservation, tout en prèservant au maximum les caractéristiques physiques, biochimiques et organoleptiques des aliments. Selon ces deux méthodes, il s'agit de traitements de stérilisation, c'est-à-dire bactéricides, puisqu'ils détruisent le maximum de germes.

Plus récemment, grace aux progrès de la cryogénie, les aliments à conserver sont soumis non plus à des températures positives élevées mais au contraire à des températures négatives : congélation à -20 ou meme -35degrés Celsius, surgélation ou "surcongélation" à des températures négatives analogues à celles de la congélation mais provoquées très rapidement. Selon ces deux méthodes, il s'agit de traitements d'inhibition bactérienne dont les effets sont comparables à ceux des produits bactériostatiques car il n'y a pas destruction de germes d'origine, leur nombre reste inchangé, ces températures empechant seulement leur multiplication. L'intéret essentiel des traitements par le froid vient de leur faible action sur l'aspect et la saveur des aliments qui sont considérés comme plus naturels par les consommateurs.

On connait aussi le procédé qui prévoit de placer des aliments dans une enveloppe étanche et d'y faire le vide, ce qui a pour conséquence d'empecher l'oxydation des aliments due à l'oxygène de l'air. On conserve donc de manière satisfaisante la saveur et l'aspect des aliments et si l'on doit faire cuire ces aliments après les avoir confiné sous vide, la durée de cuisson est moins longue et il se produit moins de pertes de poids qu'à l'air libre (moins de dix pour cent au lieu d'environ trente). En outre, l'enveloppe s'applique intimement contre les aliments et les immobilise par serrage. Un tel procédé prévoyant une opération de cuisson n'est applicable dans la pratique qu'à des morceaux de viande compacts et essentiellement à du muscle.

On peut citer également le procédé qui consiste à faire cuire des aliments l'air libre, c'est-à-dire de manière traditionnelle, éventuellement en autoclave, à température relativement élevée, plus de 90 degrés Celsius, puis à les placer dans des enveloppes pendant qu'ils sont encore à leur température de cuisson, puis à fermer l'enveloppe hermétiquement, puis à refroidir rapidement l'ensemble aliments-enveloppe jusqu'à une température positive de 0 à 3 degrés Celsius. Il est clair que ce procédé présente des inconvénients car la cuisson traditionnelle à l'air libre et l'emploi de telles températures provoque une véritable transformation des aliments et les soumet à une forte oxydation due à la présence d'air (et donc d'oxygène) constamment renouvelé. De plus, le conditionnement à température relativement élevée (plus de 40 degrés Celsius) rend impossibles les manipulations directes et l'on doit faire appel des appareils comprenant des pompes, des conduits, des doseurs qui sont absolument incompatibles avec des aliments qui présentent des morceaux de plus de trois centimètres de coté. Gela élimine toutes les viandes en sauce, les poissons en tranches etc. Ce procédé, dans la pratique, est réservé aux produits fragmentés, pateux ou coulants : sauces à la viande hachée, "chili con carne", riz, soupes et potages, pates alimentaires avec beurre et sel seulement etc.

La présente invention concerne des produits cuits mais "frais" c'est-à-dire non artificiellement conservés par l'application de traitements physiques ou chimiques : températures élevées ou très basses, sur-pressions ou dépressions (vide), déshydratation, lyophilisation, dessication ou autres. Bien entendu l'invention exclut aussi la conservation par des produits chimiques : "Frais" qualifie également les produits qui, dans les magasins, sont présentés à des rayons maintenus à température positive de 1 à 7 degrés Celsius et qui ne sont gardés que quelques jours ou qui, dans les restaurants, centres de restauration collective ou analogues sont gardés en chambres froides pour quelques jours seulement : produits laitiers, semi-conserves, etc.

Pour situer l'état de la technique, on peut citer les documents suivants :
-FR-A-2 539 589 qui décrit un produit alimentaire dont certains éléments ne sont pas cuits mais aptes à subir une cuisson. Pour le consommer, il faut ouvrir l'emballage, répandre son contenu dans une poele par exemple et de le laisser "rotir" environ une vingtaine de minutes.

-US-A-3 769 042 qui concerne un produit alimentaire déshydraté et ensuite traité par des produits chimiques telq que glycérol, propylène glycol ou sorbitol.

-FR-A-1 387 674 qui concerne un procédé pour la mise en conserve de viande et de sauce, selon lequel la sauce est en partie déshydratée, le tout étant ensuite emballé sous vide dans des boites de conserve rigides.

-US-A-3 132 029 qui décrit une conserve alimentaire qui peut etre stockée indéfiniment, placée dans une enveloppe souple dont on retire l'air "en excès" et que l'on soumet à des températures supérieures à 100 degrés Celsius dans un récipient sous pression.

-FR-A-2 552 634, FR-A-2 288 481 et GB-A-741 678 qui concernent des stérilisateurs.

-DE-A-2 937 808 qui décrit un procédé de traitement thermique de saucisses puis leur pasteurisation.

La présente invention se place dans un domaine différent de ceux rappelés ci-dessus car elle prévoit l'absence totale de traitements thermiques forts et l'élimination du vide. Elle concerne, en effet, les produits dits frais et non les produits artificiellement conservés.

Elle s'applique aux préparations culinaires à plusieurs composants : viandes, poissons ou charcuterie, légumes, fruits, de toutes dimensions, sauces etc. qui nécessitent une cuisson et elle prévoit que ces préparations ne subissent aucune pression positive ou négative différente de la pression atmosphérique, aucune température négative, meme pour leur stockage, et aucune température positive supérieure à 100 degrés Celsius pour leur cuisson.

A cette fin, l'invention à pour objet une préparation culinaire caractérisée en ce qu'elle comprend plusieurs composants hétérogènes tels que viandes, légumes et sauce cuits, placés ensemble dans une enveloppe souple avec un gaz tel que de l'air, cet ensemble préparation culinaire-enveloppe étant conservé à une température positive comprise entre 0 et 7 degrés Celsius, et de préférence entre 0 et 3 degrés Celsius, afin que la préparation comprenne des composants frais c'est-à-dire ayant été cuits à une température inférieure à 100 degrés Celsius à la pression atmosphérique et n'ayant subi aucune congélation.

L'invention a également pour objet un procédé pour l'élaboration d'une telle préparation culinaire à partir de composants frais hétérogènes tels que viandes, légumes et sauce, caractérisé en ce qu'il consiste à préparer individuellement tous les composants, à les grouper ensuite dans une enveloppe souple, à fermer celle-ci de manière étanche en emprisonnant ensemble lesdits composants et un gaz tel que de l'air, à immerger l'enveloppe souple ainsi garnie et fermée dans un fluide à la pression atmosphérique et dont la température est substantiellement égale à celle de l'ambiance, à élever graduellement cette température jusqu'à une valeur dite "de cuisson" variable selon les cas mais toujours inférieure à 100 degrés Celsius et simultanément apte à maintenir le gaz emprisonné dans l'enveloppe souple au moins à son volume d'origine, à maintenir l'enveloppe souple garnie et fermée, immergée dans le fluide pendant plusieurs heures pour provoquer une cuisson lente des composants de la préparation, à réguler la température du fluide pour maintenir celle des composants à quelques points pour cent près pendant tout le temps nécessaire à la cuisson, à abaisser ensuite cette température assez rapidement pour que, en particulier, celle des composants passe de 50 à 30 degrés Celsius en moins d'une heure et jusqu'à ce que les composants atteignent une température positive comprise entre 0 et 7 degrés Celsius, à retirer l'enveloppe souple du fluide, à la stocker à cette température positive, puis au moment de servir la préparation, à la réchauffer soit dans l'enveloppe souple, soit hors de l'enveloppe souple jusqu'à une température de consommation d'au moins 50 degrés Celsius et, enfin, à présenter la préparation pour sa consommation.

Selon d'autres caractéristiques de ce procédé :
-après avoir fermé l'enveloppe souple garnie, on refroidit l'ensemble enveloppe souple-contenu jusqu'à une température positive inférieure à 7 degrés Celsius et on le stocke ainsi avant de l'immerger dans le fluide en vue de la cuisson des composants;

-certains au moins des composants sont partiellement cuits avant d'etre placés dans l'enveloppe souple afin qu'ils atteignent tous en meme temps leur cuisson finale individuelle voulue, dans l'enveloppe souple, malgré leurs aptitudes différentes à ladite cuisson finale;

-certains au moins des composants sont dorés en surface par grillage, braiisage ou analogue avant d'etre placés dans l'enveloppe souple;

-les composants sont rapidement refroidis par un titement cryogénique dès la fin de l'opération de dorage pour les amener en quelques minutes à une température positive mais inférieure à 7 degrés Celsius;

-on mesure la température à coeur des composants de la préparation en procédant par analogie, en plaçant une sonde de température à l'intérieur dun témoin placé au sein du meme fluide que l'enveloppe souple, pendant toute la durée de la mise en oeuvre du procédé, la sonde de température étant reliée à un instrument de mesure et/ou de controle;

-le témoin est réalisé en un matériau réutilisable ayant sensiblement les memes propriétés de perméabilité thermique que la préparation, tel que de la gélose conformée en un bloc calibré pour avoir un volume analogue soit à celui d'une enveloppe souple garnie, soit à celui d'un des plus gros morceaux de la préparation;

-on agit sur la température du fluide, soit pour la modifier, soit pour la maintenir, en faisant circuler le fluide d'une enceinte contenant l'enveloppe souple à un échangeur de température situé hors de l'enceinte, et vice versa pendant toute la durée de la mise en oeuvre du procédé, l'échangeur de température étant réglé soit pour apporter des calories au fluide, soit pour lui en retirer, soit pour etre neutre, le fluide restant toujours à la pression atmosphérique dans l'enceinte;

-le fluide est de l'eau et en ce que l'on introduit au moins une enveloppe souple garnie dans l'enceinte vide d'eau, puis que l'on introduit l'eau à sa température naturelle du lieu et qu'on la fait circuler de l'enceinte vers l'échangeur de température pour la chauffer et dudit échangeur vers l'enceinte tout en faisant monter son niveau dans l'enceinte uis que l'on maintient à la fois la température de l'eau au-dessous de 100 degrés Celsius et son niveau dans l'enceinte au-dessus de l'enveloppe souple ou des enveloppes souples les plus haut situées jusqu'à la fin de la cuisson, puis que l'on vidange l'eau de l'enceinte, puis que l'on introduit dans l'enceinte de l'eau à sa température naturelle du lieu et qu'on la fait circuler de l'enceinte vers l'échangeur pour la refroidir et dudit échangeur vers l'enceinte tout en faisant monter son niveau dans l'enceinte puis que l'on maintient à la fois la température de l'eau entre 0 et 7 degrés Celsius et son niveau dans l'enceinte au-dessus de l'enveloppe souple ou des enveloppes souples les plus haut situées jusqu'à ce que la température à coeur des composants soit comprise entre 0 et 7 degrés Celsius, puis que l'on vidange l'eau de l'enceinte puis que l'on retire l'enveloppe souple ou les enveloppes souples et qu'on les stocke à cette dernière température.

L'invention a également pour objet une installation destinée à la mise en oeuvre du procédé ci-dessus, caractisée en ce qu'elle comprend d'une part une enceinte qui doit contenir à la pression atmosphérique au moins une enveloppe souple garnie de la préparation culinaire et fermée, et qui est associée à un circuit de circulation de fluide comprenant au moins deux conduits reliés à un échangeur de température extérieur à l'enceinte et, d'autre part, une source de fluide raccordée audit circuit un second circuit pour un autre fluide étant associé à l'échangeur et d'une part à des moyens susceptibles de modifier la température dudit autre fluide et d'autre part à des moyens susceptibles de maintenir ledit autre fluide à une température donnée;

Selon d'autres caractéristiques de cette installation :

-le circuit de circulation du fluide comprend une pompe de mise en mouvement, un conduit raccordé à la source de fluide et muni d'une vanne, un conduit raccordé à la source de fluide et muni d'une vanne, le circuit lui-meme étant muni d'une vanne située en aval de celle du conduit raccordé à la sortie de vidange, toutes ces vannes étant controlées pour pouvoir etre ouvertes ou fermées selon que l'on veut soit introduire du fluide dans le circuit de circulation et simultanément le faire circuler, soit faire circuler le fluide sans en introduire, soit vidanger le fluide seulement;

-l'installation comprend des paniers gerbables devant contenir au moins une enveloppe souple garnie et présentant des parois traversées de passages horizontaux.

L'invention sera mieux comprise par la description détaillée ci-après faite en référence au dessin annexé. Bien entendu, la description et le dessin ne sont donnés qu'à titre exemple indicatif et non limitatif.

La figure 1 est une vue schématique en coupe d'une enveloppe souple garnie et fermée conforme à l'invention.

La figure 2 représente un schéma d'une installation mettant en oeuvre le procédé conforme à l'invention.

La figure 3 est une vue schématique en coupe d'une enveloppe souple garnie et fermée conforme à l'invention, représentée lors de la cuisson des aliments qu'elle contient pour illustrer une caractéristique du procédé de l'invention.

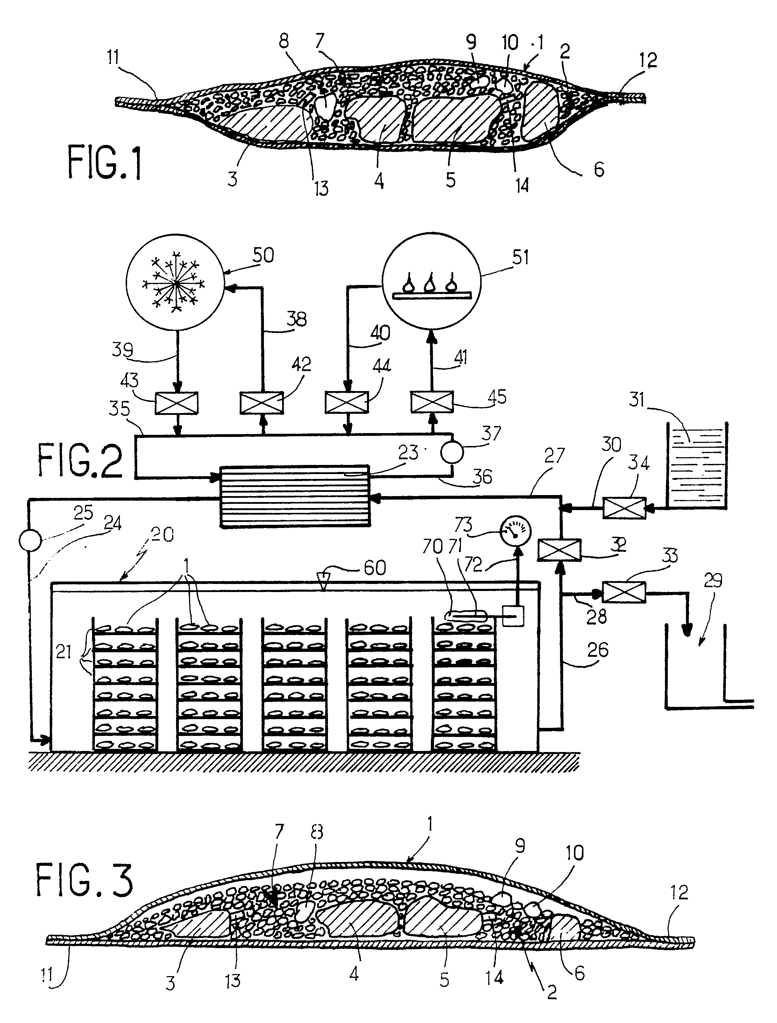

Une préparation alimentaire conforme à l'invention peut se présenter, lorsqu'elle est encore emballée, comme le montre la figure 1 : une enveloppe étanche souple 1 scellée, transparente ou pas, contenant la préparation proprement dite. L'ensemble est malléable c'est-à-dire que la préparation n'est pas serrée par l'enveloppe et que l'enveloppe contient un gaz lui donnant un volume nettement supérieur à celui qu'elle aurait si, en y ayant fait le vide, elle était appliquée contre les différents éléments de la préparation.

Quand l'ensemble enveloppe-préparation est proposé à la vente, il est rangé sur un rayon de magasin où règne une température telle que la préparation alimentaire est maintenue à une température positive comprise entre 0 et 3 à 5 degrés Celsius. Ces rayons réfrigérés sont connus dans les magasins à auto-service pour contenir les produits dits "frais" : yaourts, beurre et margarine, semi-conserves etc.

Quand la préparation doit etre réchauffée sur place, ce qui est le cas des cantines et restaurants, l'ensemble enveloppe-préparation est conservé à une température positive comprise entre 0 et 3 à 5 degrés Celsius dans une chambre froide ou un réfrigérateur.

L'enveloppe 1 peut etre un simple sac souple formé à partir d'un film de matière synthétique simple ou complexe, ainsi que cela est représenté. Mais l'enveloppe peut aussi etre moins molle et notamment réalisée en carton, en carton doublé d'une feuille plastique, d'une barquette en plastique dit "rigide" etc. L'enveloppe peut aussi etre une barquette ou une boite plus rigide, contenant un sac de type 1 ou constituée par l'association d'un film étanche et d'un entourage plus rigide. Dans le premier cas la barquette ou la boite imprimée et illustrée contient un sac indépendant pour lui apporter une meilleure présentation et pour permettre, par sa rigidité relative, la superposition stable de plusieurs enveloppes sur un rayon ou une étagère. Dans le second cas, la barquette ou la boite imprimée et illustrée contient directement la préparation. Il est clair que si la préparation est placée dans une barquette ou autre boite relativement rigide, elle n'est pas malléable à travers ce conditionnement. On ne peut donc pas constater la mobilité relative de la préparation et de l'enveloppe par le simple toucher. Pour s'en assurer, il faut par conséquent ouvrir la barquette ou la boite. Le qualificatif de "souple" pour caractériser l'enveloppe associée à la préparation conforme à l'invention signifie que celle-ci ne nécessite nullement des boites en métal ou des bocaux en verre devant résister à des efforts de pression ou de dépression puisque l'invention exclut précisément de tels efforts.

Mais que la préparation soit placée dans une enveloppe souple, molle ou relativement rigide, il y a toujours entre la préparation et son enveloppe une liberté de mouvements relatifs et le volume interne de ladite enveloppe est toujours supérieur au volume de la préparation.

On a représenté schématiquement la préparation 2 placée dans l'enveloppe 1 pour montrer qu'elle contient plusieurs éléments hétérogènes : des morceaux de viande 3, 4, 5 et 6, des petits légumes 7 et quelques plus gros légumes 8, 9 et 10, le tout avec une sauce qui se répartit de manière naturelle mais qu'il est impossible d'individualiser et de référencer sur le dessin. L'enveloppe souple 1 peut présenter deux zones de soudures transversales 11 et 12 lorsque le sac provient de sections d'une gaine extrudée ou bien deux zones longitudinales lorsque le sac est obtenu par soudure de deux bandes. Le film constituant l'enveloppe 1 peut etre formé de plusieurs couches permettant d'obtenir un effet barrière et/ou ayant des propriétés isolantes afin que l'on puisse transporter l'ensemble dans un simple sac à provisions, par exemple, c'est-à-dire sans protection particulière contre la déperdition thermique. On peut aussi, bien entendu, placer l'enveloppe, au moment de son retrait du rayon réfrigéré, dans une boite ou barquette munie d'un élément d'isolement.

Comme on l'a précisé, la préparation est enfermée dans l'enveloppe avec un gaz qui peut etre de l'air. Il en résulte un avantage provenant du "jeu" qui subsiste entre les aliments et l'enveloppe. Cette dernière n'étant pas fortement appliquée contre le contenu, contrairement à ce qui se passe quand on fait le vide, la préparation peut comprendre des parties agressives pour l'enveloppe telles que des os. C'est ce que l'on a représenté sur les figures 1 et 3 où l'on voit que les morceaux de viande 3 et 5 (par exemple des tronçons de menbres de volaille) présentent des os 13 et 14.

Pour illustrer le procédé de l'invention, on a choisi une installation à grande capacité, pour des dizaines, voires des centaines, d'enveloppes garnies mais il va de soi que l'invention est également applicable à des installations plus modestes, y compris ménagères.

Ici, l'installation comprend une enceinte constituée par une cuve 20 dans laquelle on doit placer des paniers gerbés 21 contenant chacun plusieurs enveloppes 1. Cependant, il est bon que les enveloppes 1 soient disposées en une seule couche et non pas superposées afin de ne pas écraser les enveloppes inférieures car il faut qu'au moment de la cuisson, les vapeurs intérieures circulent librement. Les paniers 21 peuvent, par exemple, avoir une hauteur un peu supérieure à l'épaisseur des enveloppes garnies et etre munis de cloisons transversales assurant le maintien latéral des enveloppes 1.

A l'extérieur de la cuve 20, se trouve un échangeur de température 23 associé deux circuits. Le premier comprend d'une part un conduit 24 aboutissant la cuve 20 et sur lequel une pompe 25 est intercalée et d'autre part un conduit 26 provenant de la cuve 20 et dont une branche 27 aboutit l'échangeur tandis qu'une autre branche 28 rejoint un ensemble de vidange 29. Un conduit 30 relie une source d'eau 31 et est mis en communication avec la branche 27. Des vannes respectivement 32, 33 et 34 sont intercalées sur le branche 27, sur la branche 28 et sur le conduit 30.

Le second circuit comprend un conduit d'entrée 35 et un conduit de sortie 36 reliés pour constituer un circuit fermé sur lequel une pompe 37 est intercalée. Le conduit 35-36 communique avec quatre conduits 38, 39, 40 et 41 sur chacun desquels se trouve une vanne respectivement 42, 43, 44 et 45. Le conduit 38 constitue une entrée dans un dispositif réfrigérant 50 et le conduit 39 constitue une sortie de ce meme dispositif réfrigérant 50. Le conduit 41 constitue une entrée dans un dispositif chauffant 51 et le conduit 40 constitue une sortie de ce meme dispositif chauffant 51.

Le fonctionnement de cette installation est le suivant :

Par mise en marche de la pompe 25, on provoque l'entrée d'eau potable dans la cuve 20 et pour faire monter son niveau dans celle-ci, on ferme la vanne 33 et l'on ouvre les vannes 32 et 34. L'eau arrive par le conduit 30, pénétre dans le premier circuit par la branche 27, traverse l'échangeur de température 23 et suit le conduit 24. Le débit de la pompe 25 est réglé de telle sorte qu'il dépasse le débit possible par la vanne 32. L'eau circule donc de la cuve 20 à l'échangeur 23 mais son niveau monte progressivement. Quand ce niveau atteint son maximum, indiqué en 60, la vanne 34 est fermée et le débit de la pompe 25 est diminué jusqu'à égaler le débit de sortie, afin que le niveau se stabilise tout en laissant l'eau circuler.

Selon que le second circuit de l'échangeur 23 véhicule un fluide froid ou un fluide chaud, la température de l'eau du premier circuit s'abaisse ou s'élève graduellement.

Pour abaisser la température de l'eau, on ferme les vannes 44 et 45 et l'on ouvre les vannes 42 et 43. Le fluide du second circuit parcourt ainsi l'échangeur 23, le conduit 36, le conduit 35 jusqu'au conduit 38, perd ses calories dans le dispositif 50, sort de celui-ci par le conduit 39 et rejoint le conduit 35 pour rentrer dans l'échangeur 23. Ce dernier étant ainsi parcouru par un fluide froid, l'eau du premier circuit cède ses calories et sa température baisse.

Pour élever la température de l'eau, on ferme les vannes 42 et 43 et l'on ouvre les vannes 44 et 45. Le fluide du second circuit parcourt ainsi l'échangeur 23, le conduit 36, le conduit 35 jusqu'au conduit 41, prend des calories dans le dispositif 51, sort de celui-ci par le conduit 40 et rejoint le conduit 35 pour rentrer dans l'échangeur 23. Ce dernier étant ainsi parcouru par un fluide chaud, l'eau du premier circuit absorbe des calories de ce fluide et sa température s'élève.

En arretant l'action des dispositifs 50 et 51, notamment en les isolant par fermeture des vannes 42, 43, 44 et 45, on rend l'échangeur neutre et l'on maintient inchangée la température de l'eau. Naturellement, dans la pratique, il se produit des déperditions thermiques et pour maintenir réellement la température de l'eau, on doit réguler l'action des dispositifs thermiques 50 et 51.

On va maintenant décrire le procédé conforme à l'invention, mis en oeuvre avec l'installation décrite ci-dessus.

Rappelons que l'invention concerne une préparation "fraiche" et non des produits congelés, surgelés, appertisés ou pasteurisés. Les composants de départ sont par conséquent eux-memes frais, ce qui n'interdit pas, bien au contraire, que certains des composants aient pu etre individuellement cuits sous pression, ou fumés, ou conservés quelque temps une température positive dans une chambre froide par exemple, car cela ne retirerait pas le caractère "frais" de la préparation tout entière.

La viande est découpée en morceaux. Les dimensions de ces morceaux dépendent de la préparation et il peut s'agir de très petits fragments comme ceux qui résultent du "coupage en dés" mais on peut aussi prévoir des volailles entières. S'il s'agit d'une préparation à partir d'une volaille découpée, les morceaux ont généralement la grosseur d'une cuisse coupée en deux. Si la volaille est une dinde, chaque cuisse peut etre coupée en au moins quatre morceaux.

Après découpage de la viande, les morceaux peuvent etre soumis à l'action d'un four pour qu'ils deviennent dorés en surface en quelques minutes. Dès la sortie du four, les morceaux sont refroidis très rapidment, par exemple jusqu'à 5 ou 6 degrés Celsius en deux minutes, afin d'empecher l'apparition d'exsudat. Cette opération est importante car c'est à la cuisson, qui interviendra plus tard dans l'enveloppe étanche fermée, que se produirait l'exsudation, or cette cuisson se fera en présence d'une sauce et celle-ci serait déliée, décomposée par sa dilution avec l'exsudat liquide, de sorte que la préparation serait de qualité médiocre, voire inacceptable.

Les morceaux de viande refroidis sont conservés à température positive mais voisine de 0 degrés Celsius jusqu'au moment où ils devront etre cuits.

Parallèlement à cette préparation de la viande, on élabore une sauce par des moyens traditionnels, à la mesure d'un foyer, d'une production artisanale ou d'une fabrication industrielle, avec assaisonnement : sel, épices, condiments, aromates, etc.

On prépare également les éventuels fruits ou légumes d'accompagnement.

Ces éléments différents, hétérogènes, doivent etre groupés dans une enveloppe 1 en vue de leur cuisson simultanée et il faut tenir compte des durées de cuisson individuelles. On rencontre souvent des légumes qui doivent cuire moins longtemps que la viande qu'ils accompagnent. Dans ce cas, on procède à une pré-cuisson individuelle des différents éléments en présence, pour qu'ils atteignent tous en meme temps le degré de cuisson voulu pour la préparation en cause, lors de l'opération de cuisson finale intervenant dans l'enveloppe 1, quand ils sont tous groupés. On prend comme temps de référence celui que réclame l'élément cuisant le plus vite.

Dans une enveloppe 1 en matériau étanche, mais encore ouverte, on introduit l'un après l'autre les différents éléments de la préparation dans l'ordre correspondant aux manipulations les plus rationnelles, compte tenu des dispositions du lieu de préparation et de la localisation des appareils d'élaboration et/ou de stockage.

Les quantités à placer dans chaque enveloppe 1 sont déterminées selon les caractéristiques de chaque élément. On peut, par exemple, placer un certain nombre de morceaux de viande (que l'on doit par conséquent compter), un certain poids de légumes (que l'on doit par conséquent peser) et un certain volume de sauce (que l'on doit par conséquent doser). Pour ces opérations, on peut agir manuellement, mécaniquement et plus ou moins automatiquement.

Après remplissage, on ferme l'enveloppe 1. Comme on l'a expliqué plus haut, il ne faut pas créer de vide dans l'enveloppe 1. Afin que l'enveloppe 1 contienne un gaz, on peut soit l'injecter après fermeture, selon une méthode connue en soi pour remplacer l'air par ce gaz, soit fermer l'enveloppe en emprisonnant le gaz ambiant, l'air. On peut utiliser un gaz neutre tel que de l'azote mais l'on se prive alors d'un effet que l'invention recherche : la dilatation du gaz qui évite, lors de la cuisson, que l'enveloppe 1 tende à s'appliquer contre les éléments de la préparation. On souhaite, au contraire que cette dilatation (qui ne doit pas aller jusqu'à gonfler éxagérément l'enveloppe 1) favorise la création d'un espace interne dans lequel se mélangent les fumets, vapeurs, parfums et gouts des différents éléments de la composition pour reconstituer une cuisson proche de la cuisson traditionnelle et plus particulièrement la cuisson dite "à l'étouffée". On note, toutefois, l'originalité de cette solution car la cuisine traditionnelle à l'étouf fée ne s'applique pas à des composants pré-cuits (légumes) et à une sauce préparée isolément et terminée avant cette cuisson.

Sur la figure 3, on a représenté - schématiquement l'enveloppe 1 soumise à la chaleur lors de la cuisson de la préparation mais, malgré la forme en dome qu'on a donné à la partie supérieure de l'enveloppe 1, on doit rappeler que la température de cuisson que préconise le procédé selon l'invention n'atteint que des valeurs modérées et en tous cas inférieures à 100 degrés Celsius, de sorte que la dilatation du gaz est elle-meme faible et gonfle peu l'enveloppe 1. Elle soulage plutot des tensions et, par là, favorise les échanges internes, comme précisé plus haut. Le fait que l'enveloppe 1 reste souple (ni tendue par une surpression de gonflement, ni raidie par le vide), favorise en outre les écoulements du fluide de chauffage et de refroidissement entre les différentes enveloppes 1 placées dans la cuve 20.

Des expériences ont montré que l'air est un gaz qui convient particulièrement bien au procédé selon l'invention car d'une part il est disponible partout et d'autre part il a une action sur les aliments qui est celle, quoique très largement méconnue, de la cuisson traditionnelle, ce qui procure aux aliments cuits selon l'invention la saveur de la cuisine de ménage d'excellente qualité.

Dès lors que toutes les conditions d'hygiène sont remplies dans le local où ces opérations ont lieu, on ferme les enveloppes à l'air libre et l'on emprisonne ainsi l'air qui se trouvait naturellement dans l'enveloppe ouverte, lors de son remplissage.

Ce remplissage s'effectue en prenant les différents éléments de la préparation leur température : certains peuvent etre froids, certains peuvent etre chauds.

Les enveloppes remplies et hermétiquement closes sont placées dans des paniers 21 à claire-voie, gerbés en plusieurs piles, cinq selon ce qui est représenté schématiquement sur la figure 2. On utilise avantageusement des paniers relativement plats, pour une seule enveloppe en hauteur, en matière synthétique, et dont les parois présentent des passages horizontaux. Grace à cela, l'eau qu'on fait circuler comme on l'a dit plus haut s'écoule facilement par les passages des paniers 21 et s'insinue entre les enveloppes 1 qui, n'étant pas tendues, cèdent facilement aux courants d'eau.

Le gerbage de paniers a pour but de superposer des enveloppes 1 sans que leur poids agisse sur elles et sans empecher la libre circulation du fluide de chauffage ou de refroidissement : en étant posée sur un fond à claire-voie et en étant surmontée à une certaine distance par le fond du panier supérieur, chaque enveloppe 1 baigne dans le courant de fluide et acquiert rapidement dans toute sa masse la température dudit fluide. En raison du contact intime entre le fluide et les enveloppes 1, l'échange thermique est efficace, rapide et réparti dans tout l'ensemble des enveloppes 1. Quand celui-ci est de l'eau, ou tout au moins un liquide, les enveloppes 1 subissent la poussée d'Archimède qui favorise à la fois les flux externes et les flux internes.

En outre, l'espace qui règne au-dessus des enveloppes 1 permet à chacune d'elles de se déformer librement et de favoriser ainsi les échanges physico-chimiques internes qui accompagnent la cuisson des différents composants.

Lorsque le chargement des paniers 21 contenant des enveloppes 1 est terminé, on prend un témoin 70 de température à coeur. Il peut s'agir tout simplement d'un aliment compact et de dimensions comparables à celles d'une enveloppe 1, tel qu'un gros muscle de bovin avec lequel on prépare généralement des viandes roties ou braisées. Mais selon une caractéristique intéressante de l'invention, on utilise un pain de gélose ayant des propriétés de conductibilité thermique comparables à celles des composants les moins thermiquement perméables (très généralement la viande) et on lui donne des dimensions choisies empiriquement mais voisines de celles des morceaux les plus gros de la composition - (trés généralement la viande, aussi).

Que le témoin 70 soit un aliment ou un pain de gélose, il constitue en quelque sorte un palpeur auquel on associe une sonde de température 71 que l'on y enfonce à coeur, cette sonde 71 de tout type connu, étant reliée par un conducteur 72 à un instrument de mesure 73 tel qu'un enregistreur de température à stylet.

Lorsque la cuve 20 est pleine, on ouvre les vannes 32 et 34 pour assurer l'arrivée d'eau depuis la source 31 (qui peut etre un réservoir ou une arrivée d'eau d'un réseau de distribution extérieur) et l'on ferme la vanne 33 pour assurer la circulation d'eau en circuit fermé, puis on met la pompe 25 en marche. On met en action le second circuit associé à l'échangeur 23 par les conduits 35 et 36 et comme il s'agit maintenant d'élever la température de l'eau, on met en fonction le dispositif de chauffage 51, on ouvre les vannes 44 et 45 et l'on ferme les vannes 42 et 43 afin d'isoler le circuit de refroidissement 38-39-42-43-50 et de mettre en action le circuit de chauffage, puis on met la pompe 37 en marche. Le fluide du second circuit circule depuis le conduit 36 via la pompe 37 et le conduit 41 jusqu'au dispositif de chauffage 51, puis emprunte le conduit 40 et rejoint le conduit 35 pour parcourir (de préférence à contre courant du circuit d'eau) l'échangeur 23 et revenir au conduit 36 et ainsi de suite. Dans l'échangeur 23, le second fluide cède ses calories à l'eau qui circule elle aussi et qui s'échauffe graduellement. La température de l'eau augmente donc dans la cuve 20 et les aliments de la préparation contenue dans les enveloppes 1 s'échauffent aussi. Lorsque la température à coeur du témoin 70 s'élève jusqu'à atteindre la température dite "de cuisson", on agit manuellement ou automatiquement sur le second circuit de fluide pour réguler la température de l'eau afin qu'elle maintienne la température à coeur du témoin 70 une valeur aussi stable que possible, c'est-à-dire avec le minimum de variation en plus ou en moins autour de la température de consigne qui est celle voulue pour la cuisson lente de la préparation que contiennent les enveloppes 1.

L'instrument 73 peut etre utilisé seul, auquel cas la régulation de la température de l'eau dépend d'un surveillant qui observe l'instrument 73 et qui agit sur des organes de commande, ou bien etre remplacé ou associé à des moyens de commande (non représentés) provoquant automatiquement la régulation de la température de l'eau en fonciton de la température que la sonde 71 détecte à coeur du témoin 70.

Avec cette méthode de régulation "par analogie", on ne surveille pas la température des aliments à cuire eux memes mais un témoin de nature différente. C'est par l'expérience que l'on peut établir que telle ou telle préparation est bien cuite lorsque la température à coeur du témoin 70 est maintenue à une valeur donnée pendant un temps donné. A la fin du temps de cuisson, le témoin peut etre utilisé comme un produit accessoire ou éliminé s'il s'agit d'un aliment (car il ne peut etre utilisé qu'une seule fois). S'il s'agit d'un produit non alimentaire, comme un bloc de gélose, il peut etre réutilisé mais l'on prend soin de le laisser refroidir après emploi pour qu'il reprenne la température ambiante afin qu'il se trouve dans les memes conditions de montée en température que les aliments, lors de son prochain usage.

En théorie, il ne faut pas exclure la possibilité de faire cuire en meme temps, dans la meme enceinte, des préparations différentes car il est possible qu'elles réclament toutes le meme temps de cuisson à la meme température mais, en pratique, il est plus rationnel de constituer des groupes homogènes d'enveloppes 1 contenant la meme préparation 2 pour remplir l'enceinte de cuisson.

Selon les aliments qui constituent les éléments de la préparation 2 et selon le temps de cuisson désiré pour celle-ci, la température de cuisson, c'est-à-dire la température à coeur du témoin 70, est comprise entre 50 et 85 degrés Celsius. Selon les aliments qui constituent les composants de la préparation 2 et selon la température de cuisson désirée pour celle-ci, le temps de cuisson, c'est-à-dire le temps pendant lequel la température de cuisson est maintenue (ce qui exclut le temps de montée en température et le temps de descente à la température de consevation) est compris entre trente minutes et plusieurs heures.

Ainsi, après avoir rempli la cuve 20 tout en faisant circuler l'eau entre elle et l'échangeur 23 et quand la température voulue est atteinte à coeur du témoin 70, on maintient la température de l'eau à une valeur généralement supérieure celle de cuisson, de quelques degrés Celsius, pendant tout le temps voulu. Quand ce temps est écoulé, on ferme la vanne 32 et l'on ouvre la vanne 33 pour vidanger l'eau "chaude" de la cuve 20 et l'on ferme également les vannes 44 et 45 pour neutraliser le dispositif de chauffage 51 qui lui-meme peut etre maintenu en veille ou arreté. Quand la cuve 20 est vide, on ferme la vanne 33, on ouvre les vannes 32 et 34 pour admettre de l'eau moins chaude, voire fraiche (à la température normale quelle que soit la saison lorsque la source 31 est une arrivée d'un réseau de distribution extérieur) qui parcourt le conduit 26, l'échangeur 23, le conduit 24 et la cuve 20, grace au fonctionnement de la pompe 25. On met en action (si nécessaire) le dispositif de refroidissement 50 et l'on ouvre les vannes 42 et 43 afin que le second circuit de fluide de l'échangeur 23 soit de plus en plus froid et absorbe les calories de l'eau. L'eau circule donc de la cuve 20 à l'échangeur 23 mais son niveau monte progressivement. Quand ce niveau atteint son maximum indiqué en 60, la vanne 34 est fermée et le débit de la pompe 25 est diminué jusqu'à égaler le débit de sortie, afin que le niveau se stabilise tout en laissant l'eau circuler.

Pendant tout ce temps de refroidissement (qui doit etre le plus court possible), on prend comme température de référence la température à coeur du témoin 70. Quand cette température de référence atteint une température positive mais voisine de 0 degrés Celsius (1 à 7 degrés), on ferme la vanne 32 et l'on ouvre la vanne 33 pour vidanger la cuve 20. On ferme également les vannes 42 et 43 pour isoler le dispositif de refroidissement 50 qui lui-meme peut etre maintenu en veille ou arreté.

Lorsque la cuve 20 est vide d'eau, on retire les paniers 21 et on les place le plus rapidement possible dans une chambre de stockage dont l'atmosphère est à la température de conservation qui est proche, sinon égale, celle de la préparation 2 dans les enveloppes 1 : 1 à 7 degrés Celsius et de préférence 1 à 3 degrés Celsius.

On peut éviter le stockage si très peu de temps après leur sortie de la cuve 20, les enveloppes garnies 1 sont placées directement dans des véhicules de transport à atmosphère réfrigérée à la température positive de 0 à 7 degrés Celsius. Après stockage, ou dès leur sortie de la cuve 20, les enveloppes sont expédiées vers des magasins en vue de leur vente ou vers des restaurants en vue de la consommation de leur contenu 2, après réchauffage.

Le temps de montée en température dans la cuve 20 et le temps de descente sont de l'ordre de six heures, soit douze heures en tout, auxquels s'ajoute le temps de cuisson.

Le temps de conservation à température positive de 0 à 3 degrés Celsius des préparations 2 obtenues selon l'invention est de plusieurs mois sans que l'activité bactérienne se manifeste. Mais l'on sait que des réglementations doivent etre prises en considération pour limiter à trente jours, vingt et un jours, voire sept jours seulement selon les cas, le temps qui s'écoule entre la date d'élaboration de la préparation et la date limite de mise en vente.

Ainsi que cela est bien connu, l'activité bactérienne présente un maximum dans la zone des températures comprises entre 30 et 50 degrés Celsius. Aussi, pour minimiser cette activité, il faut provoquer d'une part la montée en température et d'autre part le refroidissement pendant un temps aussi court que possible, surtout dans cette zone. Lors du rechauffage, en vue de la consommation de la préparation, l'activité bactérienne reprend et atteint son maximum dans cette zone de températures. Il faut donc, ici encore, agir le plus vite possible. Si le réchauffage de la préparation 2 a lieu dans les enveloppes 1, on peut les plonger dans le l'eau chaude, voire bouillante, pour qu'au moment de servir la préparation 2, celle-ci soit à plus de 50 degrés Celsius. Si le réchauffage de la préparation 2 a lieu hors des enveloppes 1, c'est-à-dire après avoir ouvert et éliminé celles-ci, per exemple après avoir disposé la préparation 2 dans un plat ou des assiettes, on peut utiliser un four, notamment à micro-ondes.

On va maintenant donner deux exemples concrets :

## EXEMPLE 1

Pour obtenir 100 enveloppes contenant chacune 12 portions de canard accompagné de sauce au poivre vert et de légumes variés : carottes, oignons, échalottes, on découpe 1.200 cuisses de canards en deux morceaux chacune, 100 kilos de carottes, 40 kilos d'oignons et 15 kilos d'échalottes. On place les morceaux de canard sur un tapis roulant d'un four tunnel afin qu'ils soient dorés en surface. Le four est équipé d'éléments radiants qui soumettent les morceaux de canard à environ 300 sortie du tunnel, le tapis roulant passe sous une voute d'aspersion d'un fluide glacé tel que de l'air afin que les morceaux de canards dorés soient refroidis en quelques minutes une température à coeur de l'ordre de 2 à 3 degrés Celsius. Ils sont stockés à cette température pendant que les autres composants de la préparation se terminent.

Pendant ce temps, on a découpé les carottes en rondelles et on les a fait pré-cuire à la vapeur pendant 10 minutes. On a aussi fait dorer à blanc (sans changement de leur aspect de surface) les autres légumes avec de l'huile, puis on y a ajouté 100 litres de fond de veau, 50 litres de sauce béchamel préparée à part, 5 litres de vin de Porto, 4 livres de poivre vert et 10 litres de crème fraiche pour obtenir une sauce qu'on laisse cuire dans un récipient jusqu'à consistance nappante.

Quand la sauce est prete, on place dans chacune des cent envelopes, 24 morceaux de canard et on y répartit les carottes pré-cuites ainsi que la sauce à leur température du moment, puis on ferme hermétiquement chaque enveloppe en y emprisonnant l'air ambiant. Les cent enveloppes sont rangées dans cinq paniers à vingt places en une seule couche.

En retenant l'hypothèse que l'on ne peut pas disposer rapidement d'une enceinte de cuisson, il faut stocker les enveloppes garnies. Pour cela, les paniers sont placés dans une enceinte de refroidissement rapide pour que la préparation atteigne en moins de cinquante minutes une température positive d'environ 3 degrés Celsius.

Lorsque l'on peut procéder à la cuisson, on retire les paniers contenant les enveloppes garnies pour les gerber dans une ou plusieurs cuves de type 20. On place dans l'un quelconque des paniers un témoin 70 (morceau de viande ou bloc de gélose) et on y introduit, à coeur, la sonde de température 71. On remplit la cuve 20 avec de l'eau dont la température, le jour de l'expérience, était de 16 degrés Celsius. On la fait circuler et on la chauffe jusqu'à ce que sa température propre, mesurée par un instrument de type connu (non représenté), atteigne 74 degrés Celsius, ce qui demande environ une heure et vingt minutes. Pendant ce temps, la température mesurée à coeur du témoin passe de quelques degrés à 29 degrés Celsius.

La température de l'eau est maintenue à 75 degrés Celsius et on surveille la température à coeur du témoin. Quand elle atteint la température de cuisson, en l'occurrence 68 degrés Celsius, on maintient la température de l'eau pour que la température à coeur demeure à 68 degrés Celsius pendant le temps de cuisson, en l'occurrence pendant trois heures trente minutes.

La montée en température du témoin (de quelques degrés à 68 degrés Celsius) demande environ quatre heures et le refroidissement après cuisson (de 68 degrés 0 à 5 degrés Celsius) environ quatre heures et trente minutes. Le temps d'occupation total de la cuve est donc de :

4 h + 3,5 h + 4,5 h = 12 heures

On vidange la cuve puis on introduit de l'eau à une température mesurée de 16 degrés Celsius le jour de l'expérience. On la refroidit pour qu'elle soit aussi froide que possible avant de prendre en glace, soit 0 + 1 degrés Celsius.

La température à coeur du témoin 70 commence à baisser quelques minutes après l'introduction d'eau froide. Elle passe de 74 à 50 degrés Celsius en trente minutes environ et de 50 à 30 degrés Celsius en trente minutes environ aussi, puis cette température continue de baisser jusqu'à 3 degrés Celsius en trois heures environ.

Les enveloppes peuvent rester dans l'eau maintenue à cette température puisqu'il s'agit de la température de conservation. Cela peut etre le cas en fonctionnement automatique de nuit, pour éviter de prévoir un personnel supplémentaire.

Mais le fonctionnement industriel normal prévoit avantageusement qu'aussitot atteinte la température de conservation, on vidange l'eau.

## EXEMPLE 2

Pour obtenir cent enveloppes de boeuf en sauce, on prend 190 kilos de paleron, 100 kilos de fond de veau, 1,7 kilo d'ail, 0,6 kilo de sel, 0,2 kilo de poivre et 3,5 kilos de concentré de tomate. On procède à une pré-cuisson de cet ensemble. Pour cela, on met ces éléments dans un autoclave dont on laisse le couvercle ouvert jusqu'à un début d'ébulition, puis on ferme le couvercle et on laisse pré-cuire pendant une heure. On laisse refroidir dans l'autoclave jusqu'à une température voisine de la température ambiante et l'on ouvre le couvercle. Le produit obtenu est placé dans des bacs et soumis à un refroidissement rapide.

Par ailleurs, on prépare 80 kilos de salsifis et 75 kilos de carottes que l'on fait pré-cuire à la vapeur.

On met dans les enveloppes le paleron de boeuf découpé en tranches ainsi que les légumes : salsifis et carottes.

On récupère le jus de cuisson, on le filtre et on le remet dans une marmite, puis on lie ce jus avec 4 litres de Cognac, 3,5 kilos de fécule de pommes de terre et 1,350 kilo de beurre pour obtenir une sauce que l'on place dans les enveloppes contenant déjà la viande et les légumes.

On ferme les enveloppes hermétiquement en y emprisonnant l'air ambiant.

Si une enceinte de cuisson est disponible, il est inutile de refroidir cet ensemble pour le stocker. On place donc les enveloppes garnies et fermées dans des paniers et l'on ajoute un témoin de température à coeur muni d'une sonde de température, comme dit pour l'exemple 1, et l'on place directement les paniers dans une cuve. On y introduit de l'eau que l'on chauffe progressivement, comme dit pour l'exemple 1, jusqu'à ce que l'eau atteigne 72 degrés Celsius. On surveille la température à coeur et quand elle atteint la température de cuisson, soit ici 67 degrés Celsius, on la maintient pandant trois heures. On vidange l'eau chaude, on la remplace par de l'eau à température naturelle (16 degrés Celsius lors de l'expérience) et on la refroidit progressivement jusqu'à 0 + 1 degrés Celsius. Quand la température à coeur atteint environ 3 degrés Celsius, on procède comme dit à l'exemple 1 : vidange immédiate ou reportée dans le temps, extraction des paniers et mise des enveloppes garnies en chambre de stockage à environ 3 degrés Celsius.

Naturellement, l'invention permet d'obtenir des mets de toutes sortes et non pas seulement des viandes en sauce. Il faut souligner que le mode de cuisson à l'étouffée, dans des enveloppes contenant un gaz (et avantageusement de l'air), permet de préparer des mets qui évoluent pendant la cuisson, tout particulièrement en augmentant de volume. C'est le cas des gateaux ayant une pate qui lève.

Meme lorsque la préparation ne se dilate pas, ne gonfle pas, pendant sa cuisson, la présence d'un gaz est très importante pour que les différents éléments en présence trouvent un volume libre dans lequel ils sont en contact et se melent les uns aux autres pour donner une résultante de meme espèce que celle qui résulte d'une cuisson traditionnelle, sans en présenter les inconvénients : surchauffe, oxydation et transformation des composants. En outre, la température à l'intérieur de l'enveloppe se répartit dans tout l'ensemble et ne laisse subsister aucune zone délaissée ou, au contraire, surchauffée.

L'ensemble des éléments de l'installation : vannes, pompes, indicateurs de niveau, sondes de température, thermomètres, thermostats et autres, peuvent etre intégrés à un dispositif de commande automatique. Ce dispositif peut lui-meme etre avantageusement associé à un ordinateur afin que les différents processus correspondant aux différentes préparations possibles puissent etre commandés partir de logiciels élaborés à partir de mises au point expérimetales.

On peut ainsi atteindre une production de très haute qualité, maitrisée par de grands chefs de cuisine et, simultanément, un débit industriel compatible avec les impératifs de la distribution commerciale.

La capacité des préparations conformes à l'invention à etre transportées et stockées facilement, puisqu'il s'agit de températures positives modestes, permet de prévoir une seule unité de production pour de nombreux points de distribution. Cela sous-entend que malgré la disparité des points de distribution (éloignement les uns des autres, catégories différentes : magasins de vente, restaurants, restauration de collectivités, cuisines privées), la qualité est la plus élevée possible et constante, la quantité, elle pouvant évoluer en fonction des besoins.

## Revendications

1-Préparation culinaire (2) caractérisée en ce qu'elle comprend plusieurs composants hétérogènes tels que viandes (3-4-5-6-13-14), légumes (7-8-9-10) et sauce cuits, placés ensemble dans une enveloppe souple (1) avec un gaz tel que de l'air, cet ensemble préparation culinaire (2)-enveloppe (1) étant conservé à une température positive comprise entre 0 et 7 degrés Celsius, et de préférence entre 0 et 3 degrés Celsius, afin que la préparation (2) comprenne des composants frais c'est-à-dire ayant été cuits à une température inférieure à 100 degrés Celsius à la pression atmosphérique et n'ayant subi aucune congélation.

2-Procédé pour l'élaboration d'une préparation culinaire (2) selon la revendication 1 ci-dessus à partir de composants frais hétérogènes tels que viandes (3-4-5-6-13-14), légumes (7-8-9-10) et sauce, caractérisé en ce qu'il consiste à préparer individuellement tous les composants (3-4-5-6-7-8-9-10), à les grouper ensuite dans une enveloppe souple (1), à fermer celle-ci de manière étanche en emprisonnant ensemble lesdits composants (3-4-5-6-7-8-10) et un gaz tel que de l'air, à immerger l'enveloppe souple (1) ainsi garnie et fermée dans un fluide à la pression atmosphérique et dont la température est substantiellement égale à celle de l'ambiance, à élever graduellement cette température jusqu'à une valeur dite "de cuisson" variable selon les cas mais toujours inférieure à 100 degrés Celsius et simultanément apte à maintenir le gaz emprisonné dans l'enveloppe souple - (1) au moins à son volume d'origine, à maintenir l'enveloppe souple (1) garnie et fermée, immergée dans le fluide pendant plusieurs heures pour provoquer une cuisson lente des composants (3-4-5-6-7-8-9-10) de la préparation (2), à réguler la température du fluide pour maintenir celle des composants (3-4-5-6-7-8-9-10) à quelques points pour cent près pendant tout le temps nécessaire à la cuisson, à abaisser ensuite cette température assez rapidement pour que, en particulier, celle des composants (3-4-5-6-7-8-9-10) passe de 50 à 30 degrés Celsius en moins d'une heure et jusqu'à ce que les compo sants (3-4-5-6-7-8-9-10) atteignent une température positive comprise entre 0 et 7 degrés Celsius, à retirer l'enveloppe souple (1) du fluide, à la stocker à cette température positive, puis au moment de servir la préparation (2), à la réchauffer soit dans l'enveloppe souple (1), soit hors de l'enveloppe souple (1) jusqu'à une température de consommation d'au moins 50 degrés Celsius et, enfin, à prèsenter la préparation (2) pour sa consommation.

3-Procédé selon la revendication 2, caractérisé en ce qu'après avoir fermé l'enveloppe souple (1) garnie, on refroidit l'ensemble enveloppe souple - (1)-contenu (2) jusqu'à une température positive inférieure à 7 degrés Celsius et on le stocke ainsi avant de l'immerger dans le fluide en vue de la cuisson des composants (3-4-5-6-7-8-9-10).

4-Procédé selon la revendication 2, caractérisé en ce que certains au moins des composants (3-4-5-6) sont partiellement cuits avant d'etre placés dans l'enveloppe souple (1) afin qu'ils atteignent tous en meme temps leur cuisson finale individuelle voulue, dans l'enveloppe souple (1), malgré leurs aptitudes différentes à ladite cuisson finale.

5-Procédé selon la revendication 2, caractérisé en ce que certains au moins des composants (3-4-5-6) sont dorés en surface par grillage, braisage ou analogue avant d'etre placés dans l'enveloppe souple (1).

6-Procédé selon la revendication 5, caractérisé en ce que les composants (3-4-5-6) sont rapidement refroidis par un traitement cryogénique des la fin de l'opération de dorage pour les amener en quelques minutes à une température positive mais inférieure à 7 degrés Celsius.

7-Procédé selon la revendication 2, caractérisé en ce que l'on mesure la température à coeur des composants (3-4-5-6-7-8-9-10) de la préparation - (2) en procédant par analogie, en plaçant une sonde de température (71) l'intérieur d'un témoin - (70) placé au sein du meme fluide que l'enveloppe souple (1), pendant toute la durée de la mise en oeuvre du procédé, la sonde de température (71) étant reliée à un instrument de mesure et/ou de controle (73).

8-Procédé selon la revendication 7, caractérisé en ce que le témoin (70) est réalisé en un matériau réutilisable ayant sensiblement les memes propriétés de perméabilité thermique que la préparation (2), tel que de la gélose conformée en un bloc calibré pour avoir un volume analogue soit à celui d'une enveloppe souple garnie, soit à celui d'un des plus gros morceaux (4-5) de la préparation (2).

9-Procédé selon la revendication 2, caractérisé en ce que l'on agit sur la température du fluide, soit pour la modifier, soit pour la maintenir, en faisant circuler le fluide d'une enceinte (20) contenant l'enveloppe souple (1) à un échangeur de température (23) situé hors de l'enceinte (20), et vice versa pendant toute la durée de la mise en oeuvre du procédé, l'échangeur de température - (23) étant réglé soit pour apporter des calories au fluide, soit pour lui en retirer, soit pour etre neutre, le fluide restant toujours à la pression atmosphérique dans l'enceinte (20).

10-Procédé selon la revendication 9, caractérisé en ce que le fluide est de l'eau et en ce que l'on introduit au moins une enveloppe souple - (1) garnie dans l'enceinte (20) vide d'eau, puis que l'on introduit l'eau à sa température naturelle du lieu et qu'on la fait circuler de l'enceinte (20) vers l'échangeur de température (23) pour la chauffer et dudit échangeur (23) vers l'enceinte (20) tout en faisant monter son niveau dans l'enceinte (20), puis que l'on maintient à la fois la température de l'eau au-dessous de 100 degrés Celsius et son niveau dans l'enceinte (20) au-dessus de l'enveloppe souple (1) ou des enveloppes souples (1) les plus haut situées jusqu'à la fin de la cuisson, puis que l'on vidange l'eau de l'enceinte (20), puis que l'on introduit dans l'enceinte (20) de l'eau à sa température naturelle du lieu et qu'on la fait circuler de l'enceinte (20) vers l'échangeur (23) pour la refroidir et dudit échangeur (23) vers l'enceinte (20) tout en faisant monter son niveau dans l'enceinte (20), puis que l'on maintient à la fois la température de l'eau entre 0 et 7 degrés Celsius et son niveau dans l'enceinte (20) au-dessus de l'enveloppe souple - (1) ou des enveloppes souples (1) les plus haut situées jusqu'à ce que la température à coeur des composants (3-4-5-6-7-8-9-10) soit comprise entre 0 et 7 degrés Celsius, puis que l'on vidange l'eau de l'enceinte (20), puis que l'on retire l'enveloppe souple (1) ou les enveloppes souples (1) et qu'on les stocke à cette dernière température.

11-Installation pour la mise en oeuvre du procédé des revendications 2 à 10 ci-dessus, caractérisée en ce qu'elle comprend d'une part une enceinte (20) qui doit contenir à la pression atmosphérique au moins une enveloppe souple (1) . garnie de la préparation culinaire (2) et fermée, et qui est associée à un circuit de circulation de fluide comprenant au moins deux conduits (24-27) reliés à un échangeur de température (23) extérieur l'enceinte (20) et, d'autre part, une source de fluide - (31) raccordée audit circuit (24-27), un second circuit (35-36) pour un autre fluide étant associé à l'échangeur (23) et d'une part à des moyens (50 et 51) susceptibles de modifier la température dudit autre fluide et d'autre part à des moyens susceptibles de maintenir ledit autre fluide à une température donnée.

12-Installation selon la revendication 11, caractérisée en ce que le circuit de circulation (24-26-27) du fluide comprend une pompe (25) de mise en mouvement, un conduit (30) raccordé à la source de fluide (31) et muni d'une vanne (34), un conduit (28) raccordé à la source de fluide (31) et muni d'une vanne (33), le circuit lui-meme étant muni d'une vanne (32) située en aval de celle (33) du conduit (28) raccordé à la sortie de vidange (29), toutes ces vannes (32-33-34) étant controlées pour pouvoir etre ouvertes ou fermées selon que l'on veut soit introduire du fluide dans le circuit de circulation (24-26-27) et simultanément le faire circuler, soit faire circuler le fluide sans en introduire, soit vidanger le fluide seulement.

13-Installation selon la revendication 11, caractérisée en ce qu'elle comprend des paniers gerbables (21) devant contenir au moins une enveloppe souple (1) garnie et présentant des parois traversées de passages horizontaux.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 539 589 (A. MORITZ) <br> * Page 2 * <br> --- | 1,4,5 | A 23 L 1/31 <br> A 23 L 3/10 <br> A 23 L 3/00 |
| X | US-A-3 769 042 (M. KOPLOW et al.) <br> * Résumé; revendication 1; exemples * <br> --- | 1,4,5 | |
| Y | FR-A-1 387 674 (ARMOUR & CO.) <br> * Figure 2; résumé, points 1-3; exemple 1 * <br> --- | 1,2 | |
| Y | US-A-3 132 029 (N.R. BECK) <br> * Figures 2,3; revendications; colonne 2, ligne 58 - colonne 3, ligne 20 * <br> --- | 1,2 | |
| X | FR-A-2 552 634 (P. BOISSEAU et al.) <br> * Figures; revendications 1,7; page 1, lignes 25-33, ligne 36 * <br> --- | 2,9-11 | DOMAINES TECHNIQUES RECHERCHES (Int. Cl.4) <br><br> A 23 L <br> A 23 B |
| X | FR-A-2 288 481 (F. HANAU et al.) <br> * Figure 1; revendication 5; page 9, lignes 21-37 * <br> --- | 2,9-11 | |
| X | GB-A- 741 678 (H. NISSEN) <br> * Figures; revendication 1 * <br> --- | 2,7 | |
| A | DE-A-2 937 808 (W.G. MUNK) <br> * Page 19, alinéa 2 * <br> --- -/- | 1 | |

Le présent rapport de recherche a été établi pour toutes les revendications

| Lieu de la recherche | Date d'achèvement de la recherche | Examinateur |
|---|---|---|
| LA HAYE | 18-03-1987 | GUYON R.H. |

## Office européen des brevets
## RAPPORT DE RECHERCHE EUROPEENNE

| DOCUMENTS CONSIDERES COMME PERTINENTS | | | Page 2 |
|---|---|---|---|
| Catégorie | Citation du document avec indication, en cas de besoin, des parties pertinentes | Revendication concernée | CLASSEMENT DE LA DEMANDE (Int. Cl.4) |
| A | GB-A-1 101 436 (SANDERSON STERILIZERS) --- | | |
| A | DE-A-2 258 170 (W. HENNING) --- | | |
| A | DE-B-1 020 519 (R. DEHNE) --- | | |
| A | DE-A-2 358 131 (KEFI VERWERTUNGS) --- | | |
| A | FR-A-2 342 898 (SOC. FRANCAISE DES PROD. BUITONI) --- | | |
| A | LU-A- 64 930 (GATINEAU) --- | | DOMAINES TECHNIQUES RECHERCHES (Int. Cl.4) |
| A | FR-A-2 374 078 (F.M.C.) --- | | |
| A | FR-A-2 290 249 (F.M.C.) --- | | |
| A | GB-A- 785 795 (E.O.W.E. STEN) --- ----- | | |

Le présent rapport de recherche a été établi pour toutes les revendications

| Lieu de la recherche | Date d'achèvement de la recherche | Examinateur |
|---|---|---|
| LA HAYE | 18-03-1987 | GUYON R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82